# EUROPÄISCHE PATENTSCHRIFT

(11) **EP 2 125 453 B1**
(45) Veröffentlichungstag und Bekanntmachung des Hinweises auf die Patenterteilung: **31.03.2010**
(21) Anmeldenummer: 07821761.9
(22) Anmeldetag: 24.10.2007
(51) Int. Cl.: B60S 1/04

(54) **GEHÄUSEANORDNUNG EINER WISCHERANLAGE EINES KRAFTFAHRZEUGS**
HOUSING ARRANGEMENT OF A WINDSHIELD WIPER ASSEMBLY OF A MOTOR VEHICLE
ENSEMBLE BOITIER D'UN SYSTEME D'ESSUIE-GLACE DE VEHICULE

(30) Priorität: 22.12.2006 DE 102006061250
(43) Veröffentlichungstag der Anmeldung: 02.12.2009
(73) Patentinhaber: Robert Bosch GmbH, 70442 Stuttgart (DE)
(72) Erfinder: MEYER ZUR CAPELLEN, Jens, 76131 Karlsruhe (DE); KASTINGER, Guenter, 76571 Gaggenau-Sulzbach (DE)
(86) Internationale Anmeldenummer: PCT/EP2007/061398
(87) Internationale Veröffentlichungsnummer: WO 2008/077661

(56) Entgegenhaltungen:
- EP-A- 1 266 810
- FR-A- 2 667 833
- JP-A- 11 321 568

## Beschreibung

### Stand der Technik

Die Erfindung betrifft eine Gehäuseanordnung einer Wischeranlage eines Kraftfahrzeugs gemäß dem Oberbegriff des Anspruchs 1. Eine solche Anordnung ist aus der EP 1 266 810 bekannt.

Bekannte Gehäuseanordnungen als Bestandteil von Wischeranlagen umfassen mindestens ein Gehäuse, in dem der Wischermotor-und/oder ein Wischergetriebe, welches von dem Wischermotor angetrieben ist, untergebracht sind. Dieses Gehäuse ist in dem Kraftfahrzeug an einem karosseriefesten Befestigungsrohr festgelegt. Während des Betriebs des Wischermotors erwärmt sich die Luft innerhalb des Gehäuses, so dass die Luft bestrebt ist, aus dem Gehäuse herauszuströmen. Kühlt sich die Luft innerhalb des Gehäuses wieder ab, entstehend eine Druckdifferenz zwischen dem Gehäuseinnenvolumen und der Umgebung, so dass Luft aus der Umgebung in das Gehäuse hineingesaugt wird. Um ein definiertes Ausströmen von Luft aus dem Gehäuse und ein definiertes Einströmen von Luft in das Gehäuse zu ermöglichen, ist es bekannt, in das in der Regel zumindest spritzwasserdichte Gehäuse eine Belüftungsöffnung einzubringen. Häufig ist eine derartige Belüftungsöffnung erhöht in einem Gehäusedom eingebracht, um einen Wassereintritt, insbesondere beim Ansaugen von Luft in das Gehäuseinnenvolumen zu vermeiden. Ferner ist es bekannt, die Belüftungsöffnung mit einer wasserundurchlässigen und luftdurchlässigen Membrane zu versehen. Nachteilig bei den von der Gehäuseaußenseite zugänglichen Öffnungen ist, dass die Öffnung nicht ausreichend vor Umwelteinflüssen geschützt ist.

### Offenbarung der Erfindung

### Technische Aufgabe

Der Erfindung liegt daher die Aufgabe zugrunde, eine vor einem Wassereintritt besser geschützte Be- und Entlüftungsmöglichkeit für das Gehäuse einer Gehäuseanordnung eines Wischermotors und/oder eines Wischergetriebes eines Kraftfahrzeugs bereitzustellen.

### Technische Lösung

Diese Aufgabe wird mit den Merkmalen des Anspruchs 1 gelöst. Vorteilhafte Weiterbildungen der Erfindung sind in den Unteransprüchen angegeben. In den Rahmen der Erfindung fallen auch sämtliche Kombinationen aus zumindest zwei der in der Beschreibung, den Ansprüchen und/oder den Figuren offenbarten Merkmale.

Der Erfindung liegt der Gedanke zugrunde, die aus dem Gehäuse bei Erwärmung austretende Luft in das Innenvolumen des karosseriefesten Befestigungsrohres zu leiten und andererseits bei einer Abkühlung des Gehäuseinnenvolumens Luft aus dem Befestigungsrohrinnenvolumen anzusaugen. Zu diesem Zweck ist gemäß der Erfindung ein Verbindungskanal zwischen dem Gehäuseinnenvolumen und dem Befestigungsrohrinnenvolumen vorgesehen. Die erfindungsgemäße Ausgestaltung der Gehäuseanordnung hat den Vorteil, dass das Befestigungsrohr eine Schutzummantelung für das anzusaugende Luftvolumen bildet, wobei das Befestigungsrohrinnenvolumen mit dem Gehäuseinnenvolumen über mindestens einen Verbindungskanal luftaustauschend verbunden ist.

In Ausgestaltung der Erfindung ist mit Vorteil vorgesehen, dass der Verbindungskanal von einem Hohlelement gebildet ist, welches das Gehäuseinnenvolumen mit dem Befestigungsrohrinnenvolumen verbindet.

Das Hohlelement ist mit Vorteil derart anzuordnen, dass es mindestens eine im Gehäuse vorgesehene Öffnung und mindestens eine im Befestigungsrohr vorgesehene Öffnung miteinander verbindet. Dabei ist die Öffnung im Befestigungsrohr bevorzugt in die Rohrmantelfläche eingebracht.

Für Montagezwecke ist es vorteilhaft, wenn sich die Öffnungen des Gehäuses und des Befestigungsrohres unmittelbar gegenüberliegen. Eine derartige Ausgestaltung hat zusätzlich den Vorteil, dass das Hohlelement einen vergleichsweise einfachen, im Wesentlichen geraden, insbesondere hohlzylindrischen Aufbau haben kann.

Zum Ausgleich von Fertigungs- und/oder Montagetoleranzen, ist es von Vorteil, wenn es sich bei dem Hohlelement nicht um ein (vollständig) starres Bauteil handelt, sondern wenn das Hohlelement zumindest in einem Bereich flexibel und/oder elastisches ausgebildet ist.

Von besonderem Vorteil ist es, wenn das Hohlelement nicht an der Außenseite des Befestigungsrohres endet, sondern, insbesondere durch die Öffnung in das Befestigungsrohr hineingeführt ist. Von weiterem Vorteil ist es, wenn das Hohlelement dabei über die Befestigungsrohrmitte hinausgeführt ist, insbesondere bis in die Nähe der gegenüberliegenden Seitenwand des insbesondere hohlzylindrischen Befestigungsrohres. Eine derartige Ausgestaltungsform hat den Vorteil, dass falls Wasser in das Befestigungsrohr eindringen sollte, dieses nicht oder nur schlecht durch das Hohlelement angesaugt werden kann, insbesondere dann, wenn das Hohlelement mit seiner stirnseitigen Öffnung von einem unteren Bereich des Befestigungsrohres bis zu einem oberen Bereich des Befestigungsrohres geführt ist.

Je nach Einbaulage, ist es auch vorteilhaft, dass das Hohlelement nahe an der Innenseite des Befestigungsrohres endet (erste Öffnung des Rohres). Somit ist gewährleiset, dass etwaiges Wasser im Befestigungsrohr nicht an die Stirnseite des Hohlelementes gelangt.

Um die Außenseite des Hohlelementes gegenüber den Öffnungen abzudichten, insbesondere um einen Ringspalt zwischen dem Öffnungsrand und dem Außenumfang des Hohlelementes abzudichten, ist es von Vorteil, mindestens ein Dichtelement vorzusehen. Bevorzugt ist eine Ausführungsform, bei der das Dichtelement einstückig mit dem Hohlelement ausgebildet ist, bzw. von dem Hohlelement, insbesondere von einem Radialabschnitt des Hohlelementes gebildet ist. Da das Befestigungsrohr in der Regel derart an dem Gehäuse befestigt wird, dass auch im festgelegten Zustand eine Anpresskraft auf das Befestigungsrohr in Richtung des Gehäuses wirkt, ist es von Vorteil, das Dichtelement, insbesondere den Dichtabschnitt des Hohlelementes derart anzuordnen, dass die Dichtung zwischen dem Befestigungsrohr und dem Gehäuse des Wischerantriebs verpresst ist.

Gemäß einer besonders vorteilhaften Ausgestaltung der Erfindung ist vorgesehen, dass das Hohlelement einstückig mit dem Gehäuse ausgebildet ist. In diesem Fall kann ein Montageschritt (Festlegung des Hohlelementes an dem Gehäuse) mit Vorteil entfallen. Besonders bevorzugt ist es, wenn das Hohlelement in Richtung des Befestigungsrohrs, insbesondere rotationssymmetrisch, verjüngend ausgebildet ist, wobei in diesem Fall bevorzugt die Außenfläche des Hohlelementes eine Dichtung zur Abdichtung der Öffnung im Befestigungsrohr bildet.

Um ein Ansaugen von Wasser bzw. Feuchtigkeit durch das Hohlelement in das Gehäuse hinein praktisch auszuschließen, ist eine Ausführungsform bevorzugt, bei der der Verbindungskanal, insbesondere das Hohlelement von einer luftpermeablen und wasserundurchlässigen Membran verschlossen ist.

Zusätzlich oder alternativ können weitere Löcher in das Befestigungsrohr eingebracht werden, durch die etwaiges, in das Befestigungsrohr eindringendes Wasser wieder ablaufen kann, wodurch die Wahrscheinlichkeit eines Ansaugens dieses Wassers minimiert wird sowie auch ein zusätzlicher Druckausgleich zur Umgebung ermöglicht wird, falls das Befestigungsrohr an beiden Enden geschlossen ist.

### Kurze Beschreibung der Zeichnungen

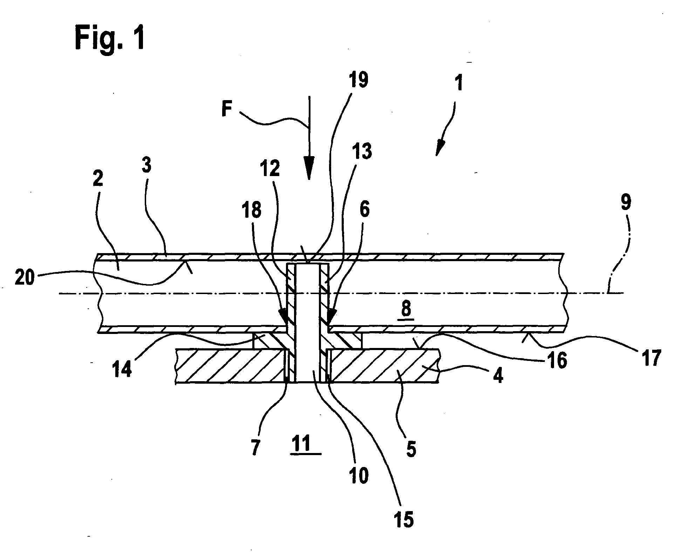

Weitere Vorteile, Merkmale und Einzelheiten der Erfindung ergeben sich aus der nachfolgenden Beschreibung eines bevorzugten Ausführungsbeispieles sowie anhand der Zeichnung. Diese zeigt in der einzigen Fig. 1 eine geschnittene schematische Teilansicht einer Gehäuseanordnung.

In den Figuren sind gleiche Bauteile und Bauteile mit der gleichen Funktion mit den gleichen Bezugszeichen gekennzeichnet.

### Ausführungsform der Erfindung

In Fig. 1 ist eine Anordnung 1 einer Wischeranlage eines Kraftfahrzeuges dargestellt. Die Anordnung 1 umfasst ein nur ausschnittsweise dargestelltes hohlzylindrisches, in der Zeichnungsebene quer verlaufendes, Befestigungsrohr 2 aus Metall, welches in einem nicht dargestellten Bereich an der Fahrzeugkarosserie festgelegt ist. Das Befestigungsrohr 2 umfasst eine Umfangswand 3 (Befestigungsrohrmantel) aus Metall.

In der Zeichnungsebene unterhalb des Befestigungsrohres 2 ist ein Ausschnitt eines Gehäuses 4, insbesondere aus Aluminiumdruckguss dargestellt. Das Gehäuse 4 umfasst eine Gehäusewand 5. In dem Gehäuse 4 ist ein nicht dargestelltes Wischergetriebe angeordnet, welches mit einem ebenfalls nicht dargestellten Antriebsmotor wirkverbunden ist, wobei der Antriebsmotor in einem ebenfalls nicht gezeigten Gehäuseabschnitt des Gehäuses 4 angeordnet ist. In der Umfangswand 3 des Befestigungsrohres 2 ist eine kreisrunde erste Öffnung 6 eingebracht, die mit einer zweiten kreisrunden Öffnung 7 in der Gehäusewand 5 des Gehäuses 4 fluchtet. Es ist auch denkbar, die Öffnungskonturen mehrkantig auszubilden, um eine Verdrehsicherung zu realisieren.

Das Befestigungsrohrinnenvolumen 8 ist über einen in diesem Ausführungsbeispiel senkrecht zur Befestigungsrohrlängsmittelachse 9 verlaufenden Verbindungskanal 10 mit dem Gehäuseinnenvolumen 11 verbunden. Der Verbindungskanal 10 ist innerhalb eines in gewissen Grenzen elastischen Hohlelementes 12 aus Kunststoff eingebracht. Eine Fertigung aus einem, insbesondere weichem Metall ist ebenfalls denkbar. Ebenfalls kann der Verbindungskanal unmittelbar im Gehäuse ausgestaltet sein. Das Hohlelement 12 von im Wesentlichen zylindrischem Aufbau weist eine Umfangswand 13 auf, die sich in einem von den freien Enden beabstandeten Bereich zur Bildung eines Dichtabschnittes 14 radial verbreitert.

Das Hohlelement 12 ist in die zweite Öffnung 7 eingesetzt. Der zwischen die Umfangswand 13 und dem Öffnungsrand gebildete Spalt 15 wird über den Dichtabschnitt 14 abgedichtet, wobei der Dichtabschnitt 14 zwischen dem Befestigungsrohr 2 und dem Gehäuse 4 mittels einer Anpresskraft F verpresst ist, wodurch sich der Dichtabschnitt 14 an die Außenoberfläche 16 dichtend anlegt. Ebenso legt sich der Dichtabschnitt 14 dichtend an die Außenoberfläche 17 des Befestigungsrohres 2 an, so dass auch ein Ringspalt 18 zwischen dem Hohlelement 12 und dem Öffnungsrand der ersten Öffnung 6 im Befestigungsrohr 2 gegenüber der Umgebung abgedichtet ist, wodurch ein Feuchtigkeitseintritt verhindert wird.

Wie aus Fig. 1 deutlich zu erkennen ist, überragt das Hohlelement 12 die Längsmittelachse 9 des Befestigungsrohres 2 derart, dass eine Stirnseite 19 des Hohlelementes 12 bis in die unmittelbare Nähe der Innenoberfläche 20 der Umfangswand 3 des Befestigungsrohres 2 auf der der ersten Öffnung 6 gegenüberliegenden Seite ragt. In der gezeigten Verbindungsposition zwischen Gehäuse 4 und Befestigungsrohr 2 (Gehäuse 4 unten; Befestigungsrohr 2 oben) würde trotz Abdichtungsmaßnahmen in das Befestigungsrohr 2 eintretendes Wasser nicht bis an die Stirnseite 19 heranragen, wodurch keine Gefahr eines Ansaugens dieses Wassers durch den Verbindungskanal 10 in das Gehäuse 4 hinein besteht.

Fakultativ kann der Verbindungskanal 10 von einer nicht gezeigten Membran verschlossen werden, wobei die Membran bevorzugt zwar luftdurchlässig, jedoch feuchtigkeitsund/oder wasserabweisend ist.

## Patentansprüche

1. Gehäuseanordnung als Bestandteil einer Wischeranlage eines Kraftfahrzeug, mit einem an einem Befestigungsrohr (2) festgelegten, einen Wischermotor und/oder ein Wischergetriebe beinhaltenden Gehäuse (4),
**dadurch gekennzeichnet,**
**dass** ein Verbindungskanal (10) vorgesehen ist, der das Gehäuseinnenvolumen (11) mit dem Befestigungsrohrinnenvolumen (8) verbindet.

2. Gehäuseanordnung nach Anspruch 1,
**dadurch gekennzeichnet,**
**dass** der Verbindungskanal (10) von einem Hohlelement (12) gebildet ist.

3. Gehäuseanordnung nach Anspruch 2,
**dadurch gekennzeichnet,**
**dass** das Hohlelement (12) mindestens eine im Gehäuse (4) vorgesehene Öffnung (6) und mindestens eine Öffnung (7) im Befestigungsrohr (2) miteinander verbindet.

4. Gehäuseanordnung nach Anspruch 3,
**dadurch gekennzeichnet,**
**dass** sich die Öffnung (6) im Gehäuse (4) und die Öffnung (7) im Befestigungsrohr (2) unmittelbar gegenüberliegen.

5. Gehäuseanordnung nach einem der Ansprüche 2 bis 4,
**dadurch gekennzeichnet,**
**dass** das Hohlelement (12) ein zumindest abschnittsweise flexibles und/oder elastisches Element ist.

6. Gehäuseanordnung nach einem der Ansprüche 2 bis 5,
**dadurch gekennzeichnet,**
**dass** sich das Hohlelement (12) in das Befestigungsrohr (2) hinein und in Befestigungsrohrquerrichtung über die Befestigungsrohrmitte hinaus, vorzugsweise bis nahezu unmittelbar an die der Öffnung (6) im Befestigungsrohr (2) gegenüberliegende Seitenwand, erstreckt.

7. Gehäuseanordnung nach einem der Ansprüche 2 bis 5, **dadurch gekennzeichnet,**
**dass** das Hohlelement (12) unmittelbar an der Mündungsinnenseite des Befestigungsrohrs (2) endet.

8. Gehäuseanordnung nach einem der Ansprüche 2 bis 7, **dadurch gekennzeichnet, dass** an das Hohlelement (12) ein zwischen dem Gehäuse (4) und dem Befestigungsrohr (2) verpresster, insbesondere radialer, Dichtabschnitt (14) angeformt ist.

9. Gehäuseanordnung nach einem der Ansprüche 2 bis 8, **dadurch gekennzeichnet, dass** das Hohlelement (12) einstückig mit dem Gehäuse (4), insbesondere als kegelstumpfförmiger Gehäusedom, ausgebildet ist.

10. Gehäuseanordnung nach einem der vorhergehenden Ansprüche, **dadurch gekennzeichnet, dass** der Verbindungskanal (10) mit einer luftpermeablen und wasserabweisenden Membran verschlossen ist.

11. Gehäuseanordnung nach einem der vorhergehenden Ansprüche,
**dadurch gekennzeichnet,**
**dass** in das Befestigungsrohr (2) mindestens eine Wasserabflussöffnung eingebracht ist.

## Claims

1. Housing arrangement as a constituent part of a windscreen wiper assembly of a motor vehicle, having a housing (4) which is fixed to a fastening tube (2) and which contains a wiper motor and/or a wiper gearing,
**characterized**
**in that** a connecting duct (10) is provided which connects the housing interior volume (11) to the fastening tube interior volume (8).

2. Housing arrangement according to Claim 1,
**characterized**
**in that** the connecting duct (10) is formed by a hollow element (12).

3. Housing arrangement according to Claim 2,
**characterized**
**in that** the hollow element (12) connects at least one opening (6), which is provided in the housing (4), and at least one opening (7) in the fastening tube (2) to one another.

4. Housing arrangement according to Claim 3,
**characterized**
**in that** the opening (6) in the housing (4) and the opening (7) in the fastening tube (2) are situated directly opposite one another.

5. Housing arrangement according to one of Claims 2 to 4,
**characterized**
**in that** the hollow element (12) is an element which is flexible and/or elastic at least in sections.

6. Housing arrangement according to one of Claims 2 to 5,
**characterized**
**in that** the hollow element (12) extends into the fastening tube (2) and beyond the fastening tube centre in the fastening tube transverse direction, preferably ending approximately directly at the side wall situated opposite the opening (6) in the fastening tube (2).

7. Housing arrangement according to one of Claims 2 to 5, **characterized**
**in that** the hollow element (12) ends directly at the aperture inner side of the fastening tube (2).

8. Housing arrangement according to one of Claims 2 to 7, **characterized in that** an in particular radial sealing section (14) is integrally formed on the hollow element (12), which sealing section (14) is pressed between the housing (4) and the fastening tube (2).

9. Housing arrangement according to one of Claims 2 to 8, **characterized in that** the hollow element (12) is formed in one piece with the housing (4), in particular as a frustoconical housing dome.

10. Housing arrangement according to one of the preceding claims, **characterized in that** the connecting duct (10) is closed off by means of an air-permeable and water-repellent diaphragm.

11. Housing arrangement according to one of the preceding claims,
**characterized**
**in that** at least one water outflow opening is formed into the fastening tube (2).

## Revendications

1. Ensemble de boîtier faisant partie d'une installation d'essuie-glace d'un véhicule automobile, comprenant un boîtier (4) fixé à un tube de fixation (2), contenant un moteur d'essuie-glace et/ou un mécanisme d'essuie-glace,
**caractérisé en ce que**
l'on prévoit un canal de connexion (10) qui relie le volume intérieur du boîtier (11) au volume intérieur du tube de fixation (8).

2. Ensemble de boîtier selon la revendication 1,
**caractérisé en ce que**
le canal de connexion (10) est formé par un élément creux (12).

3. Ensemble de boîtier selon la revendication 2,
**caractérisé en ce que**
l'élément creux (12) relie l'une à l'autre au moins une ouverture (6) prévue dans le boîtier (4) et au moins une ouverture (7) prévue dans le tube de fixation (2).

4. Ensemble de boîtier selon la revendication 3,
**caractérisé en ce que**
l'ouverture (6) dans le boîtier (4) et l'ouverture (7) dans le tube de fixation (2) sont directement en regard l'une de l'autre.

5. Ensemble de boîtier selon l'une quelconque des revendications 2 à 4,
**caractérisé en ce que**
l'élément creux (12) est un élément au moins en partie flexible et/ou élastique.

6. Ensemble de boîtier selon l'une quelconque des revendications 2 à 5,
**caractérisé en ce que**
l'élément creux (12) s'étend à l'intérieur du tube de fixation (2) et dans la direction transversale au tube de fixation au-delà du milieu du tube de fixation, de préférence pratiquement jusque contre la paroi latérale en regard de l'ouverture (6) dans le tube de fixation (2).

7. Ensemble de boîtier selon l'une quelconque des revendications 2 à 5,
**caractérisé en ce que**
l'élément creux (12) se termine directement au niveau du côté intérieur de l'embouchure du tube de fixation (2).

8. Ensemble de boîtier selon l'une quelconque des revendications 2 à 7, **caractérisé en ce qu'**une portion d'étanchéité (14) pressée entre le boîtier (4) et le tube de fixation (2), notamment radiale, est façonnée sur l'élément creux (12).

9. Ensemble de boîtier selon l'une quelconque des revendications 2 à 8, **caractérisé en ce que** l'élément creux (12) est réalisé d'une seule pièce avec le boîtier (4), notamment sous forme de dôme de boîtier de forme tronconique.

10. Ensemble de boîtier selon l'une quelconque des revendications précédentes, **caractérisé en ce que** le canal de connexion (10) est fermé par une membrane perméable à l'air et imperméable à l'eau.

11. Ensemble de boîtier selon l'une quelconque des revendications précédentes,
**caractérisé en ce**
**qu'**au moins une ouverture d'écoulement d'eau est pratiquée dans le tube de fixation (2).
